# EUROPÄISCHE PATENTSCHRIFT

(11) **EP 0 547 639 B1**
(45) Veröffentlichungstag und Bekanntmachung des Hinweises auf die Patenterteilung: **28.02.1996**
(21) Anmeldenummer: 92121655.2
(22) Anmeldetag: 19.12.1992
(51) Int. Cl.: B23K 9/20

(54) **Dielektrischer Ring für das Bolzenschweissen**
Dielectrical ring for stud welding
Anneau diélectrique pour le soudage de plots de contact

(30) Priorität: 19.12.1991 DE 9115790 U
(43) Veröffentlichungstag der Anmeldung: 23.06.1993
(73) Patentinhaber: TRW NELSON BOLZENSCHWEISSTECHNIK GMBH & CO. KG, D-58261 Gevelsberg (DE)
(72) Erfinder: Jost, Klaus Ernst, W-5800 Hagen 1 (DE)
(74) Vertreter: Schieschke, Klaus, Dipl.-Ing.

(56) Entgegenhaltungen:
- DE-U- 9 017 279
- GB-A- 584 109
- GB-A- 2 171 946

## Beschreibung

Die Erfindung betrifft einen dielektrischen Ring für das Bolzenschweißen mit den Merkmalen des Oberbegriffs des Schutzanspruchs 1.

Die Befestigung von Bolzen oder bolzenähnlichen Teilen, wie z.B. Gewindebolzen, auf ebenfalls metallischen Werkstücken erfolgt insbesondere im Automobilbau, im Bauwesen und auch auf anderen technischen Gebieten häufig durch Lichtbogen-Bolzenschweißen. Hierzu werden verschiedene Verfahren eingesetzt, die sich vor allem in der Polarität des Werkstücks und des zu verschweißenden Bolzens und durch die Art und Weise der Zündung des Lichtbogens (Hubzündung, Spitzenzündung) unterscheiden.

Ein derartiges Verfahren ist z.B. in der DE-C1-31 29 261 beschrieben. Bei diesem Verfahren erfolgt zusätzlich eine Vorwärmung des Werkstücks bei aufgesetztem Bolzen durch Widerstandserwärmung mittels auf das Werkstück aufgesetzter Kupferelektroden, wodurch insbesondere das Aufschweißen von Bolzen höherer Güte auf Werkstücke mit beliebiger Zusammensetzung ermöglicht wird.

Dabei ist der Bolzen, welcher im Bolzenhalter der Schweißpistole gehalten wird, an der dem Werkstück zugekehrten Seite von einem Keramikring umgeben, der verschiedenen Aufgaben dient: Zum einen schirmt er den Lichtbogenbereich während des Schweißvorgangs vor Umwelteinflüssen, wie z.B. störenden Luftbewegungen ab und konzentriert den Lichtbogen auf den Bereich, der durch den Innendurchmesser des Ringes bestimmt wird. Zum anderen dient er der Schaffung eines Schweißwulstes mit definierter Ausdehnung und Form, wodurch die mechanische Festigkeit der Schweißverbindung verbessert wird.

Dieses Dokument offenbart auch einen dielektrischen Ring nach dem Oberbegriff des Anspruchs 1.

Weiterhin ist in der DE-A1-32 18 057 eine Lichtbogen-Schweißvorrichtung für den Unterwasser-Einsatz beschrieben, bei welcher an Stelle eines Keramikringes ein dielektrischer Ring verwendet wird, der insbesondere aus einem Borsilikatglas besteht. Ziel dieser Maßnahme ist dabei, einen dielektrischen Ring zu schaffen, der aus einem nicht-porösen Material gebildet ist und der demzufolge die Gefahr des Einbringens von aus Poren ausgasenden Fremdstoffen in die Schmelze verringert.

Problematisch in diesem Zusammenhang sind - nicht nur beim Unterwasser-Bolzenschweißen - die hygroskopischen Eigenschaften herkömmlicher Keramikringe, so daß bei Verwendung von Ringen, die längere Zeit der üblichen Atmosphäre ausgesetzt waren, mangelhafte Schweißverbindungen entstehen können.

Nachteilig bei Ringen aus hochwertigen, nicht hygroskopischen Materialien ist jedoch deren aufwendige und kostenintensive Herstellung.

Darüberhinaus besteht das Problem, daß bestimmte Kombinationen von Materialien nur bedingt oder gar nicht mit den herkömmlichen Bolzenschweißverfahren verbunden werden können.

Der Erfindung liegt daher die Aufgabe zugrunde, einen dielektrischen Ring für das Bolzenschweißen zu schaffen, der das Verbinden von Werkstücken und Bolzen aus direkt nur schwer verschweißbaren Materialien ermöglicht, der den Schweißvorgang und die Eigenschaften der Schweißverbindung verbessert und darüberhinaus kostengünstig herstellbar ist.

Die Erfindung löst diese Aufgaben mit den kennzeichnenden Merkmalen des Schutzanspruchs 1.

Durch das Beschichten oder Tränken des dielektrischen Ringes, das beispielsweise durch kostengünstige Tauch- oder Spritzverfahren erfolgen kann, lassen sich je nach Beschichtungsmaterial oder eingebrachten Stoff folgende Vorteile erzielen: Der Lichtbogen kann durch die Verwendung geeigneter Materialien stabilisiert werden; Die Schmelze wird gegen die Atmosphäre durch Verdampfen von Beschichtungsmaterial geschützt; Das Erstarren der Schmelze läßt sich mit bestimmten Beschichtungsmaterialien verzögern, wodurch eine höhere mechanische Festigkeit erzielbar ist; Schließlich können durch die Zugabe von Legierungsstoffen Verbindungen zwischen bestimmten zu verschweißenden Werkstoffen erst ermöglicht oder die Eigenschaften solcher Verbindungen verbessert werden.

Ein weiterer Vorteil der Erfindung ist darin zu sehen, daß für die Herstellung der erfindungsgemäßen Ringe bekannte, preiswerte Keramikringe verwendet werden können, die durch ebenfalls kostengünstige Verfahren, wie z.B. Tauchbaden, mit geeigneten Stoffen getränkt oder beschichtet werden.

Weitere Ausgestaltungen der Erfindung ergeben sich aus den Unteransprüchen.

Nachfolgend wird die Erfindung anhand eines in der Zeichnung dargestellten Ausführungsbeispieles näher erläutert. In der Zeichnung zeigen:
- Fig. 1: einen nur an der Innenseite im Bereich des zwischen Bolzen und Ring entstehenden Ringraumes beschichteten dielektrischen Ring; und
- Fig. 2: einen vollständig beschichteten dielektrischen Ring.

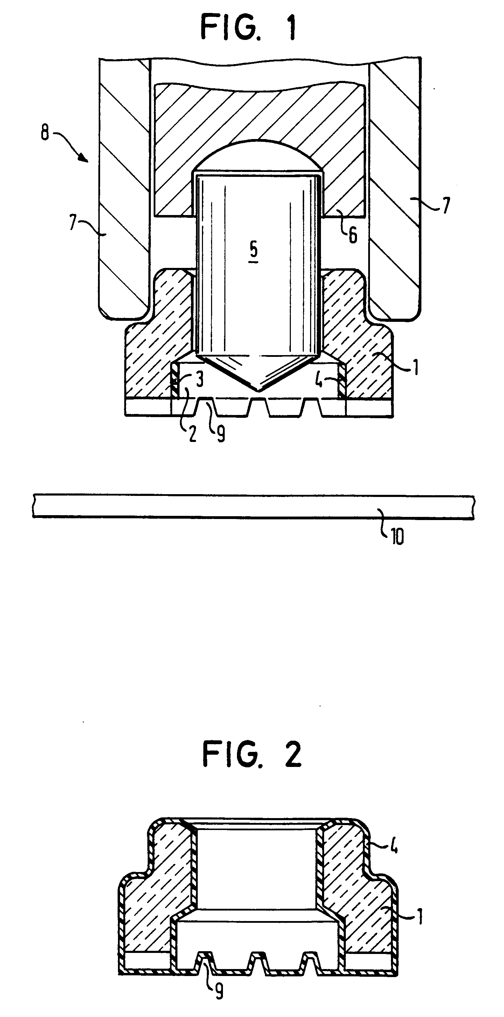

In Fig. 1 ist ein auf eine Metallplatte oder Blech 10 aufzuschweißender Bolzen 5 dargestellt, welcher in eine entsprechende Aufnahmevorrichtung 6 einer nicht näher dargestellten Bolzenschweißpistole 8 eingesetzt ist. Die Schweißpistole 8 ist mit einer ebenfalls nicht näher dargestellten Schweißstromquelle derart verbunden, daß bei Betätigen einer Auslösevorrichtung an der Schweißpistole der Bolzen 5 mit einem Pol und das Werkstück 10 mit dem anderen Pol der Schweißstromquelle verbunden wird. Die Steuerung oder Regelung des Verlaufs der Hub- und/oder Senkbewegung des Bolzens 5 in Abhängigkeit vom zeitlichen Verlauf von Schweißspannung und Schweißstrom erfolgt in bekannter Weise.

An seinem unteren Ende ist der Schweißbolzen 5 von einem im wesentlichen aus dielektrischen Material bestehenden Ring 1 umgeben, welcher in einer in geeigneter Weise ausgebildeten Haltevorrichtung 7 der Schweißpistole 8 gehalten wird.

Der Ring 1 besteht dabei vorzugsweise aus keramischem Material, kann jedoch auch aus jedem anderen beliebigen dielektrischen bzw. isolierenden Werkstoff gefertigt sein. Aufgabe dieses Ringes ist das Abschirmen des Bereichs, in dem der Lichtbogen zwischen Bolzen und Werkstück entsteht und die Konzentration des Lichtbogens und damit der Schmelzzone auf diesen Bereich. Weiterhin dient der Ring 1 zur Schaffung eines in seiner Ausdehnung und Form definierten Schweißwulstes nach dem Eintauchen des angeschmolzenen Bolzen 5 in die Schmelze des Werkstücks 10. Hierfür weist der Ring 1 im Bereich des unteren, dem Werkstück 10 gegenüberstehenden bzw. auf dieses aufgesetzten Endes einen Innendurchmesser auf, welcher um ca. 0,5 bis 1,5 mm größer ist als der Außendurchmesser des Bolzens 5 in diesem Bereich. Somit entsteht in diesem Bereich ein Ringraum 2 zwischen der Innenfläche 3 des dielektrischen Ringes 1 und der Außenwandung des Bolzens 5.

An seiner Unterseite weist der Ring 1 Ausnehmungen 9 auf, welche der Unterkante des Rings insbesondere eine zahn- oder zinnenförmige Struktur verleihen. Diese Ausnehmungen 9 bilden Öffnungen im Ringraum 2, um das Austreten von während des Schweißvorgangs entstehenden Gasen zu ermöglichen.

Der in Fig. 1 dargestellte, erfindungsgemäße dielektrische Ring 1 ist dabei an seiner den Ringraum 2 begrenzenden Innenfläche 3 mit einem Material beschichtet (Schicht 4), das während des Schweißvorgangs schmilzt und/oder ausgast bzw. verdampft. Es ist dabei jedoch keineswegs zwingend notwendig, daß das Beschichtungsmaterial tatsächlich eine Schicht 4 auf der Innenfläche 3 des Ringes 1 ausbildet. Vielmehr kann durch die Verwendung von sehr dünnflüssigen "Beschichtungs"-Materialien das Material auch in den dann zumindest in diesem Bereich aus porösem Werkstoff, wie z.B. Keramik, bestehenden Ring 1 praktisch vollständig eindringen, so daß in der oberen Schicht des Ringes 1 Material enthalten ist, das während des Schweißvorganges abgegeben wird.

Als Beschichtungsmaterialien kommen - abhängig von der speziellen Anwendung - beispielsweise Metalle, Mineralien, organische oder synthetische Werkstoffe oder Kombinationen daraus zu Anwendung.

Durch die Verwendung von derartigen beschichteten bzw. getränkten dielektrischen Ringen lassen sich je nach Beschichtungsmaterial bzw. zum Tränken des Rings verwandten Stoff folgende Effekte bzw. Verbesserungen gegenüber der Verwendung herkömmlicher Ringe erzielen:
Bei der Beschichtung von Ringen aus porösem Material lassen sich die hygroskopischen Eigenschaften solcher Ringe reduzieren oder vollständig eliminieren. Hierdurch werden Störungen in der fertigen Schweißverbindung vermieden, welche durch das Verdampfen von Feuchtigkeit während des Schweißvorgangs erzeugt werden. Zugleich wird eine Stabilisierung des Lichtbogens erreicht, da die dielektrischen Eigenschaften des Werkstoffes des Ringes nicht durch Einlagerungen von Fremdstoffen reduziert werden.

Weiterhin kann durch die Verwendung von geeigneten Beschichtungsmaterialien, die insbesondere bei Zündung des Lichtbogens plötzlich verdampfen, die zunächst in dem Raum zwischen Bolzen, Ring und Werkstück vorhandenen Atmosphäre praktisch vollständig verdrängt werden, so daß die Schmelze gegenüber aggressiven Bestandteilen der Atmosphäre geschützt ist.

Mit bestimmten Beschichtungsstoffen läßt sich zudem eine Verzögerung der Schweißbaderstarrung erreichen, wodurch die mechanische Festigkeit der Schweißverbindung vorteilhaft beeinflußt wird.

Schließlich kann zudem durch eine geeignete Beschichtung eine Legierung der Schmelze erfolgen, wodurch sich bestimmte Werkstoffe erst verschweißen oder sich die Eigenschaften solcher Schweißverbindungen günstig beeinflussen lassen.

In Fig. 2 ist ein weiteres Ausführungsbeispiel des erfindungsgemäßen dielektrischen Ringes dargestellt. Dabei ist dieser Ring gegenüber dem in Fig. 1 gezeigten Ring vollständig beschichtet. Die Beschichtung wird zwar auch bei diesem Ring nur im vorstehend beschriebenen Bereich wirksam, jedoch ist die Beschichtung des gesamten Ringes technisch einfacher - beispielsweise mittels eines Tauch- oder Spritzverfahrens - realisierbar. Obwohl in diesem Fall mehr Beschichtungsmaterial erforderlich ist, wird der Vorteil des geringeren technischen Aufwands bei der Beschichtung im allgemeinen überwiegen. Zudem werden die ggf. hygroskopischen Eigenschaften des Rings und die damit verbundene nachteilige Auswirkung auf den Schweißvorgang bzw. die fertige Schweißverbindung am wirksamsten reduziert.

Als Kompromiß kann das teilweise Tauchen der Ringe, beispielsweise des gesamten Bereichs mit vergrößertem Innendurchmesser, erfolgen. Allerdings erfordert dies das Tauchen der Ringe in einer definierten Position, wodurch sich der Herstellungsaufwand gegenüber dem einfachen Tauchen vergrößert.

Die Erfindung schafft somit einen dielektrischen Ring für das Bolzenschweißen, der gegenüber bekannten Ringen die vorstehend beschriebenen gravierenden Vorteile bezüglich des Schweißvorgangs bzw. der Eigenschaften der Schweißverbindung aufweist und der gleichzeitig auf einfache Weise und kostengünstig herstellbar ist.

## Patentansprüche

1. Dielektrischer Ring (1) für das Bolzenschweißen, dessen Innendurchmesser (3) in seinem unteren, einem Werkstück (10) zugekehrten Bereich größer ist als der Außendurchmesser eines an das Werkstück (10) anzuschweißenden Bolzens (5), wodurch um den Bolzen ein Ringraum gebildet ist,
dadurch gekennzeichnet,
daß zumindest die den Ringraum (2) begrenzende Innenwandung (3) des dielektrischen Rings (1) zumindest in Teilbereichen mit einem Material versehen, beschichtet oder getränkt ist, welches während des Schweißvorgangs schmilzt und/oder verdampft.

2. Dielektrischer Ring nach Anspruch 1, dadurch gekennzeichnet, daß der Ring (1) aus keramischem Material besteht.

3. Dielektrischer Ring nach Anspruch 1 oder 2, dadurch gekennzeichnet, daß der Ring (1) vollständig mit dem Material versehen, beschichtet oder getränkt ist.

4. Dielektrischer Ring nach einem der vorstehenden Ansprüche, dadurch gekennzeichnet, daß das Material aus einem metallischen, mineralischen, organischen oder synthetischen Werkstoff oder einer Kombination daraus besteht.

## Claims

1. Dielectric ring (1) for bolt welding, whose internal diameter (3) is larger in its lower region, facing a workpiece (10), than the external diameter of a bolt (5) which is to be welded to the workpiece (10), as a result of which an annular space is formed around the bolt,
characterized
in that at least that inner wall (3) of the dielectric ring (1) which bounds the annular space (2) is provided, coated or impregnated, at least in subregions with a material which melts and/or vaporizes during the welding process.

2. Dielectric ring according to Claim 1, characterized in that the ring (1) is composed of ceramic material.

3. Dielectric ring according to Claim 1 or 2, characterized in that the ring (1) is completely provided, coated or impregnated with the material.

4. Dielectric ring according to one of the preceding claims, characterized in that the material is composed of a metallic, mineral, organic or synthetic material, or of a combination thereof.

## Revendications

1. Anneau diélectrique (1) destiné au soudage des goujons, dont le diamètre interne (3) dans sa zone inférieure dirigée vers la pièce à usiner (10) est supérieur au diamètre extérieur d'un goujon (5) à souder sur la pièce à usiner (10), un espace annulaire étant formé autour du goujon,
caractérisé en ce qu'
au moins la paroi interne (3) délimitant la zone annulaire (2) de l'anneau diélectrique (1) tout au moins dans des zones partielles, est revêtue ou imprégnée d'un matériau qui fond et/ou s'évapore au cours de l'opération de soudage.

2. Anneau diélectrique selon la revendication 1, caractérisé en ce que l'anneau (1) est constitué par un matériau en céramique.

3. Anneau diélectrique selon la revendication 1 ou 2, caractérisé en ce que l'anneau (1) est revêtu ou imprégné dans sa totalité du matériau.

4. Anneau diélectrique selon l'une des revendications précédentes, caractérisé en ce que le matériau est constitué par une matière métallique, minérale, organique ou synthétique ou une combinaison de celles-ci.
